# FASCICULE DE BREVET EUROPEEN

(11) **EP 3 687 837 B1**
(45) Date de publication et mention de la délivrance du brevet: **25.05.2022**
(21) Numéro de dépôt: 18788816.9
(22) Date de dépôt: 25.09.2018
(51) Int. Cl.: B60C 11/00, B60C 11/03, B60C 11/04

(54) **PNEU POUR VÉHICULE HORS-LA-ROUTE AYANT UNE ENDURANCE AMELIORÉE**
REIFEN FÜR GELÄNDEFAHRZEUGE MIT VERBESSERTER BESTÄNDIGKEIT
TYRE FOR OFF-ROAD VEHICLE HAVING IMPROVED ENDURANCE

(30) Priorité: 25.09.2017 FR 1758819
(43) Date de publication de la demande: 05.08.2020
(73) Titulaire: Compagnie Générale des Etablissements Michelin, 63000 Clermont-Ferrand (FR)
(72) Inventeur: NUGIER, Franck, 63040 Clermont-Ferrand Cedex 9 (FR); FEUARDENT, Valérie, 63040 Clermont-Ferrand Cedex 9 (FR)
(74) Mandataire: Millanvois, Patrick Jacques Jean
(86) Numéro de dépôt international: PCT/FR2018/052352
(87) Numéro de publication internationale: WO 2019/058084

(56) Documents cités:
- EP-A1- 1 834 813
- EP-A1- 3 181 376
- WO-A1-2015/150542
- WO-A1-2015/182078
- FR-A1- 3 044 596
- JP-A- 2004 262 295

## Description

La présente invention concerne un pneu pouvant être de structure radiale et destiné à équiper un véhicule « hors-la-route » utilisé dans des travaux de génie civil (véhicule « off-the-road » en anglais) ; elle concerne plus particulièrement la bande de roulement d'un tel pneu et son dessin de sculpture.

Plus particulièrement, l'invention concerne les pneus utilisés sur les véhicules travaillant dans les mines souterraines (en anglais « *underground mining* »), ces pneus étant pourvus d'une bande de roulement de grande épaisseur le plus souvent dépourvue de tout dessin de sculpture. Ces pneus correspondent aux pneus référencés E4 ou L4 ou L5 selon les codes d'usage normalisés dans les règlements ISO, ETRTO, TRA, JATMA.

L'épaisseur de la bande de roulement de tels pneus et plus particulièrement l'épaisseur de matière à user pour ces pneus est d'au moins 50 mm et peut aller, à ce jour, jusqu'à 150 mm.

### Définitions :

Plan médian équatorial : c'est un plan perpendiculaire à l'axe de rotation et passant par les points du pneu radialement les plus éloignés dudit axe. Ce plan divise le pneu en deux moitiés égales.

Par direction radiale, on entend dans le présent document une direction qui est perpendiculaire à l'axe de rotation du pneu (cette direction correspond à la direction selon laquelle est mesurée l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. La direction circonférentielle est perpendiculaire à la fois à la direction axiale et à une direction radiale.

Par axialement ou radialement vers l'extérieur, on entend une direction qui est orientée vers l'extérieur de la cavité interne du pneu, cette dernière contenant l'air de gonflage du pneu.

Les conditions usuelles de roulage du pneu sont celles qui sont, par exemple, définies par la norme européenne E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Une découpure désigne de manière générique soit une rainure soit une incision (ou dans ce dernier cas une rainure étroite) et correspond à l'espace délimité par des parois de matière se faisant face et distantes l'une de l'autre d'une distance non nulle dite "largeur de la découpure". Ce qui différencie une incision ou rainure étroite d'une rainure c'est précisément cette distance ; dans le cas d'une incision ou rainure étroite, cette distance est appropriée pour permettre la mise en contact au moins partielle des parois en vis-à-vis délimitant ladite incision lors du passage dans le contact avec le sol. Dans le cas d'une rainure, les parois de cette rainure ne peuvent venir en contact l'une contre l'autre dans les conditions usuelles de roulage.

### ÉTAT DE LA TECHNIQUE

Un pneu destiné à équiper un véhicule hors-la-route comprend une partie de sommet, des flancs prolongeant de part et d'autre cette partie de sommet, ces flancs se terminant par des bourrelets. Ces bourrelets sont destinés à assurer une liaison mécanique entre le pneu et la jante sur laquelle il est monté.

La partie de sommet du pneu comprend une armature de renforcement surmontée radialement à l'extérieur par une bande de roulement destinée à venir en contact avec le sol lors du roulage. Cette bande de roulement présente radialement à l'extérieur une surface de roulement destinée à assurer le contact du pneu avec le sol. Cette bande de roulement comprend une épaisseur de matière à user pendant le roulage.

En outre, le pneu comprend une armature de carcasse s'étendant à la fois dans la partie de sommet du pneu et dans les flancs pour venir s'ancrer dans chaque bourrelet. Cette armature de carcasse est constituée d'une ou plusieurs couches de carcasse, chaque couche de carcasse comprenant une pluralité de câbles de renfort généralement métalliques pour ce type de pneus, ces renforts étant disposés les uns à côté des autres et enrobés dans un matériau élastomère. Dans le cas d'un pneu d'architecture radiale les câbles de renfort de l'armature de carcasse sont orientés radialement c'est à dire pour faire un angle égal ou proche de 90 degrés avec la direction circonférentielle.

Par ailleurs, cette armature de carcasse est surmontée radialement à l'extérieur dans la partie de sommet par une armature de sommet, cette dernière étant elle-même surmontée de la bande de roulement.

L'armature de sommet comprend une armature de travail formée d'au moins deux couches de travail ayant pour fonction de ceinturer le pneu pour conférer une rigidité au pneu et assurer une bonne tenue de route au pneu. Cette armature de travail peut en outre comprendre une ou plusieurs couches de frettage formées de renforts orientés avec un angle faible ou égal à zéro degré avec la direction circonférentielle. L'armature de travail équilibre à la fois des sollicitations mécaniques de gonflage, générées par la pression de gonflage du pneu, et des sollicitations mécaniques de roulage, générées lors du roulage du pneu sur un sol et transmises par la bande de roulement.

Par ailleurs, et pour limiter les conséquences des agressions en roulage sur des sols irréguliers, l'armature de sommet peut comprendre au moins une couche dite couche de protection. Cette couche de protection est formée de câbles métalliques élastiques, parallèles entre eux ; par élastique, on entend un câble métallique qui présente un grand allongement sous faible effort. Cette couche de protection est disposée au plus près de la bande de roulement, c'est-à-dire radialement à l'extérieur de l'armature de sommet.

La bande de roulement d'un tel pneu destiné à équiper un véhicule hors-la-route présente une forte épaisseur de matière à user, c'est à dire une épaisseur au moins égale à 50 mm. Il est d'usage de prévoir, pour un pneu ayant de telles épaisseurs et dépourvu de tout dessin de sculpture sur sa bande de roulement, la présence d'une encoche localisée sur l'un des bords latéraux de la bande de roulement et dont le fond est positionné radialement au-dessus de l'armature de sommet. Cette encoche sert de repère visuel pour suivre l'usure de la bande de roulement et déterminer le moment opportun pour le renouvellement du pneu ou son rechapage.

Cette forte épaisseur est nécessaire pour résister aux conditions sévères de roulage sur des sols irréguliers sur lesquels sont présents de nombreux objets pouvant présenter un caractère agressif.

On constate que la présence d'une forte épaisseur de matériau élastomérique combinée à des conditions d'utilisation particulièrement sévères, notamment une charge particulièrement élevée, peut générer des augmentations de température très importantes en certains points du pneu et plus précisément dans la bande de roulement. Le niveau de température atteint peut devenir un facteur imposant la mise en place de limites lors de l'usage du pneu. Par exemple l'utilisateur est souvent conduit à limiter la vitesse maximale du véhicule afin de limiter le niveau thermique dans la bande de roulement et au voisinage des extrémités axiales des couches de l'armature de sommet.

Un moyen connu pour pallier en partie ce problème consiste à pourvoir la bande de roulement avec des découpures (rainures larges et/ou rainures étroites), c'est à dire à former par moulage un réseau de découpures ouvertes sur la surface de roulement de la bande de roulement, ces découpures s'étendant dans l'épaisseur de la bande de roulement. Ces découpures, par la présence des parois les délimitant, jouent le rôle de moyen de ventilation thermique dans la matière constituant la bande de roulement. Toutefois, ces mêmes découpures induisent une diminution de la rigidité de la bande de roulement ce qui génère des déformations plus importantes de la bande de roulement par écrasement et cisaillement en roulage. Ces mêmes découpures, lorsqu'elles sont de grande largeur, peuvent affaiblir la bande de roulement en permettant la capture de corps étrangers à l'intérieur de ces découpures. Une fois capturés ces corps étrangers peuvent se déplacer vers le fond des découpures et venir progressivement blesser le matériau de bande de roulement voire l'armature de sommet et provoquer alors une corrosion des câbles métalliques de l'armature de sommet par infiltration d'eau.

Une solution à ces problèmes a été proposée dans le document EP 2251214, solution selon laquelle on forme des rainures étroites orientées circonférentiellement. Par rainure étroite, on entend ici une rainure dont la largeur (c'est à dire la distance moyenne séparant les parois en vis-à-vis) est déterminée pour que les parois délimitant cette rainure se ferment et entrent en contact entre elles au moins partiellement lors du passage dans le contact du pneu avec le sol. Le terme incision peut également être employé pour désigner une rainure étroite.

Des recherches ont été menées par la Déposante afin d'améliorer encore les performances de pneus à forte épaisseur de bande de roulement et déterminer une géométrie particulière de rainure étroite qui, en combinaison avec la présence de matériaux spécifiques dans cette bande de roulement, assure une meilleure ventilation thermique et permette ainsi d'augmenter la limite de la vitesse de roulage, tout en assurant une protection suffisante de la bande de roulement vis-à-vis des agressions subies pendant le roulage.

En parallèle des recherches, des documents telles que les demande FR3044596A1, WO2015182078A1, JP2004262295A, et que EP1834813A1, qui divulguent au moins en partie des sillons circonférentiels d'une bande de roulement, ont été consultées.

### BREF EXPOSE DE L INVENTION

Cet objectif a été atteint, selon l'invention, par un pneu pour véhicule hors-la-route comprenant :
- une partie de sommet prolongée de part et d'autre par des flancs, ces flancs se terminant par des bourrelets,
- une armature de carcasse s'étendant dans la partie sommitale, les flancs et les bourrelets,
- cette partie de sommet comprenant une armature de sommet comprenant une armature de travail et une armature de protection, cette armature de sommet étant située radialement sur l'armature de carcasse et radialement à l'extérieur une bande de roulement ayant une largeur W et une épaisseur de matière E à user, cette épaisseur de matière à user E étant au moins égale à 50 mm, cette bande de roulement comprenant une superposition d'au moins deux couches de matériaux, une première couche localisée radialement à l'intérieur et une deuxième couche localisée radialement à l'extérieur de la première couche, cette deuxième couche venant en contact avec le sol quand le pneu est neuf, cette deuxième couche ayant une épaisseur comprise entre 20% et 90% de l'épaisseur de matière E à user,
- la bande de roulement étant pourvue d'au moins deux rainures étroites faisant le tour du pneu.

En outre, dans cette bande de roulement :
- les rainures étroites ont une forme générale zigzagante de longueur d'onde L et d'amplitude A, la longueur d'onde L étant comprise entre 10% et 120% de la largeur axiale W de la bande de roulement, et l'amplitude A étant comprise entre 10% et 75% de cette même largeur axiale W,
- le matériau de la première couche de la bande de roulement est choisi pour être faiblement hystérétique ; par faiblement hystérétique on entend ici un matériau dont la valeur mesurée tan(δ) est au plus égale à 0.30,
la largeur LR de chaque rainures étroite zigzagante est inférieure à 15% de la profondeur maximale desdites rainures étroites, et
chaque rainure étroite zigzagante comprend en outre une pluralité de zones de largeur réduite dans lesquelles la largeur LRₘᵢₙᵢ est comprise entre 5% et 75% de la largeur LR de ladite rainure étroite zigzagante.

Une découpure fait le tour du pneu dès lors qu'elle est continue et se prolonge tout autour du pneu c'est à dire autour de son axe de rotation. Elle est de forme générale zigzagante dès lors qu'elle a une géométrie crénelée ou sinusoïdale ou ondulante de part et d'autre d'une direction moyenne circonférentielle. L'amplitude A de cette forme générale zigzagante est mesurée dans la direction transversale (direction parallèle à l'axe de rotation du pneu) et sa longueur d'onde L est mesurée dans la direction circonférentielle.

Dans le présent document, la valeur mesurée tan(δ), mesurant le facteur de perte par hystérèse d'un matériau caoutchoutique, est obtenue sur des éprouvettes prélevées sur pneu. Chaque éprouvette de matière de forme cylindrique a une hauteur de 2 mm et un diamètre de 10 mm et est soumis à une sollicitation sinusoïdale en cisaillement simple alterné, à la fréquence de 10Hz, à une température de 60°C sur un viscoanalyseur (Metravib VA4000), selon la norme ASTM D 5992-96. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G^{∗}) et le facteur de perte tan(δ). Pour le cycle aller, on indique la valeur maximale de tan(δ) observée, noté tan(δ)max ; ainsi que le module G^{∗} à 50% de déformation noté G^{∗}50%. Les propriétés dynamiques et notamment tan(δ)max, représentative de l'hystérèse, sont mesurées.

Préférentiellement, on prend pour matériau de la première couche de la bande de roulement un matériau ayant une valeur de tan(δ) qui est au plus égale à 0.20.

Avantageusement, l'amplitude A des rainures étroites zigzagantes est comprise entre 10% et 40% de la largeur W de la bande de roulement.

Chaque rainure étroite zigzagante a une profondeur maximale qui est au moins égale à 20% de l'épaisseur E de matière à user et au plus égale à 90% de la même épaisseur E.

Encore plus préférentiellement, la profondeur maximale des rainures étroites zigzagantes est comprise entre 40% à 70% de l'épaisseur E de matière à user.

Selon un mode de réalisation préféré de l'invention, la bande de roulement comprend deux rainures étroites de forme générale zigzagante, ces rainures étant situées de part et d'autre du plan médian équatorial. Chaque rainure étroite est entièrement formée dans une moitié de largeur de la bande de roulement de façon à délimiter entre lesdites rainures étroites une partie centrale de largeur comprise entre 0% et 70% de la largeur W de la bande de roulement.

Avantageusement, la partie centrale, entre deux rainures étroites zigzagantes formées sur chacun des bords de la bande de roulement, a une largeur comprise entre 40% à 70% de la largeur W de la bande de roulement. Si cette largeur est plus grande que 70%, alors l'effet induit sur le niveau thermique est insuffisant. Si la largeur est trop faible et inférieure à 40%, les contraintes dans la partie centrale sont plus élevées et peuvent affecter l'endurance de la bande de roulement.

Dans ce mode de réalisation, la partie centrale, de largeur comprise entre 40% et 70% de la largeur W de la bande de roulement, est pourvue d'une pluralité de rainures étroites disposées de manière régulière ou quasi régulière autour du pneu.

Dans une variante de réalisation particulièrement intéressante, il est réalisé une pluralité de pontages mécaniques dans les rainures étroites zigzagantes au moins sur les parties orientées principalement circonférentiellement et situées axialement le plus à l'extérieur. Ce pontage formé à partir du fond des rainures étroites relie mécaniquement les parois en vis-à-vis et réduit localement la profondeur de ces rainures étroites d'au moins 20% et préférentiellement 50% de la profondeur maximale de ces rainures étroites. Grâce à ces pontages, il est possible d'assurer une protection suffisante de la bande de roulement vis-à-vis d'éventuelles agressions subies pendant le roulage.

Cette dernière variante de réalisation comportant des pontages dans les rainures étroites peut être encore améliorée en formant un pontage sur toutes les parties orientées principalement circonférentiellement.

De façon préférentielle, chaque rainure étroite zigzagante comprend une pluralité de parties de rainure orientées principalement circonférentiellement, chacune de ces parties ayant une longueur Le mesurée en projection sur la direction circonférentielle. Chaque rainure étroite comprend en outre une pluralité de parties de rainure orientées transversalement ou obliquement selon un angle D au plus égal à 45 degrés avec la direction axiale. Les parties de rainures circonférentielles et les parties de rainures transversales composant les rainures étroites zigzagantes sont disposées de manière alternée et sont reliées entre elles par des parties de rainures de jonction pour former une rainure continue de forme générale ondulante ou zigzagante autour d'une direction circonférentielle moyenne.

Grâce à la présence de ces au moins deux rainures étroites zigzagantes, il est créé une surface d'échange thermique avec l'air environnant, cette surface d'échange thermique correspondant à chacune des parois délimitant une rainure étroite. Avantageusement, chaque paroi de rainure étroite a, à neuf, une surface qui est comprise entre trois et sept fois la surface transversale équivalente de la bande de roulement, cette dernière surface étant égale au produit de la largeur W de la bande de roulement par l'épaisseur de matière à user E.

Selon un mode de réalisation préférentiel, les rainures étroites formées sur chaque bord sont déphasées l'une par rapport à l'autre dans la direction circonférentielle afin de réduire les vibrations induites par leur présence.

Dans un autre mode de réalisation préférentiel, il est formé une troisième rainure étroite de forme générale zigzagante axialement entre les deux rainures étroites zigzagantes formées au voisinage des bords de la bande de roulement. Selon une variante, cette troisième rainure étroite a une profondeur maximale égale à ou proche de la profondeur maximale deux autres rainures étroites et peut avoir une longueur d'onde égale ou différente de celle des rainures étroites de bord.

La profondeur de chaque rainure étroite est limitée à au plus 80% de l'épaisseur E de matière à user afin de conserver un lien mécanique suffisant entre la partie épaule de la bande de roulement et le reste de la bande de roulement et ainsi limiter le risque d'arrachement de matière en cas de forte sollicitation.

Selon un mode de réalisation préféré, la deuxième couche (c'est à dire la couche de matière radialement à l'extérieur de la première couche) constituant la bande de roulement a un indice de déchirabilité, défini comme la déformation moyenne à rupture, qui est au moins égal à 400% et une énergie à rupture au moins égale à 50 MJ.

L'indice de déchirabilité d'un matériau élastomérique est mesuré au moyen d'une éprouvette en forme de parallélépipède ayant pour dimensions : 10 mm x 85 mm x 2.5 mm et entaillée en son milieu par trois entailles de profondeur 5 mm. Cette éprouvette est soumise, dans une enceinte réglée à une température de 100°C, à un test de rupture par traction. On enregistre la force à rupture et la déformation à rupture. L'énergie nécessaire pour provoquer la rupture de l'éprouvette est calculée comme le produit de la force à rupture par la déformation à rupture.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue volumique d'une première variante de pneu selon l'invention ;
La figure 2 montre une vue surfacique d'une deuxième variante de pneu selon l'invention ;
La figure 3 montre une vue surfacique d'une troisième variante de pneu selon l'invention ;
La figure 4 montre une coupe transversale de la troisième variante de pneu montrée avec la figure 3.
Les figures 5 à 8 montrent des détails de modes de réalisation de l'invention.

### DESCRIPTION DES FIGURES

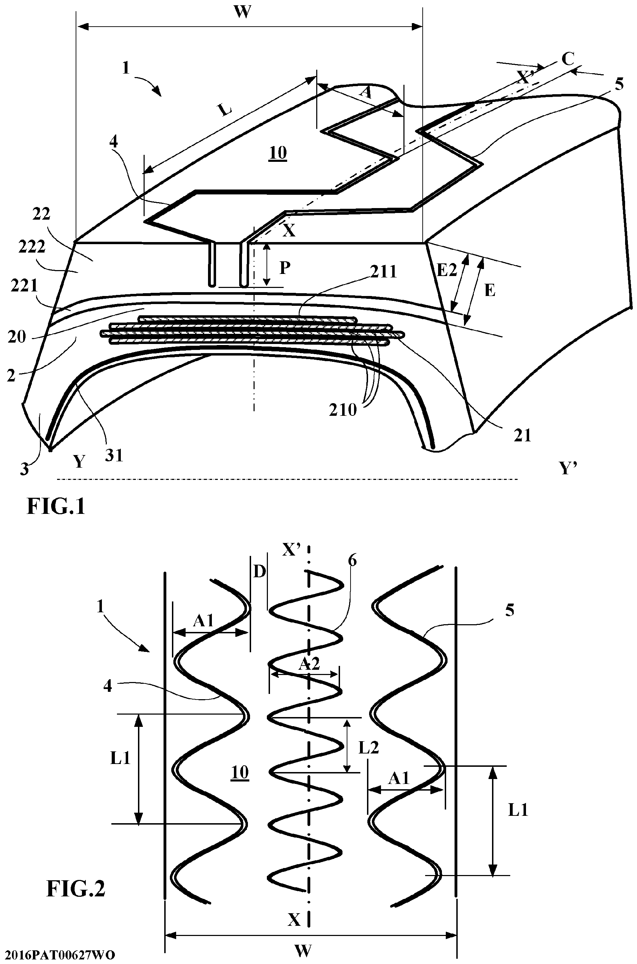

La figure 1 montre une vue volumique d'une première variante selon l'invention d'un pneu 1 de dimension 29.5 R 29 pour véhicule hors-la-route employé pour des travaux de génie civil. Dans cette variante, le pneu 1 comprend une partie de sommet 2 prolongée de part et d'autre par des flancs 3, ces flancs 3 se terminant par des bourrelets non montrés sur cette figure 1, et une armature de carcasse 31 s'étendant dans la partie de sommet 2, dans les flancs 3 et dans les bourrelets.

La partie de sommet 2 est surmontée radialement à l'extérieur par une bande de roulement 22 de largeur W égale à 680 mm et d'épaisseur E de matière à user égale à 110 mm dont on voit la surface de roulement 10 sur la figure 1. La partie de sommet 2 comprend une armature de sommet 21 formée de plusieurs couches de travail 210 empilées les unes sur les autres et une armature de protection 211 positionnée radialement à l'extérieur des couches de travail.

La bande de roulement 22 est formée par superposition de deux couches de matériaux, une première couche 221 et une deuxième couche 222, cette deuxième couche 222 étant localisée radialement à l'extérieur de la première couche 221 pour venir en contact avec le sol quand le pneu est neuf, cette deuxième couche 222 ayant une épaisseur égale à 92 mm. L'épaisseur de la première couche 221 est égale à 18 mm et est destinée à être usée en roulage dès lors que la deuxième couche 222 est en totalité usée.

Le matériau de la première couche 221, située radialement à l'intérieur de la deuxième couche 222, est choisi pour avoir une valeur d'hystérèse faible caractérisée par une valeur tan(δ) qui est ici égale à 0.11, cette valeur de tan(δ) étant obtenue dans les conditions précisées dans le présent document.

Par ailleurs, le matériau de la deuxième couche 222 de la bande de roulement 22 en contact avec le sol à l'état neuf présente un allongement à rupture égal à 773% et une énergie à rupture égale à 103MJ. Un tel matériau est par exemple décrit dans la demande de brevet publiée sous la référence WO 2015/150542 A1.

Une couche intermédiaire 20 est intercalée entre l'armature de sommet 21 et la bande de roulement 22 ; cette couche intermédiaire a notamment pour rôle de lier la bande de roulement au reste du pneu et d'ajouter une protection de l'armature de sommet dès lors que la première couche 221 de la bande de roulement vient en contact avec le sol en roulage après usure de la deuxième couche 222.

Dans cette bande de roulement 22, il est formé par moulage deux rainures étroites zigzagantes 4, 5 ayant une même géométrie, ces rainures étroites zigzagantes sont continues et font le tour complet du pneu autour de son axe de rotation (indiqué par la direction YY' sur cette figure 1). Ces rainures étroites zigzagantes 4, 5 ont une même profondeur maximale P égale à 70 mm et une largeur moyenne égale à 6 mm, cette largeur moyenne étant appropriée pour que les parois délimitant ces rainures étroites zigzagantes 4, 5 viennent au moins partiellement en contact l'une contre l'autre lors du roulage du pneu. Les rainures étroites zigzagantes sont présentes à neuf pour assurer une ventilation efficace et disparaissent dès lors que la bande de roulement a une épaisseur réduite donc présentant un échauffement moindre en roulage.

Chaque rainure étroite zigzagante 4, 5 a une forme crénelée pour laquelle on définit une longueur d'onde L égale ici à 240 mm et une amplitude A égale à 300 mm.

Dans la configuration de cette première variante, les deux rainures étroites zigzagantes 4, 5 sont en phase circonférentiellement l'une par rapport à l'autre et coupent le plan médian équatorial matérialisé sur la figure 1 par la ligne XX'. De cette manière, une région centrale C est générée à l'intérieur de laquelle on trouve des parties desdites deux rainures étroites. Dans le cas présent, la largeur de cette région centrale C est égale à 50 mm et est centrée sur la ligne XX'.

Grâce à la présence de ces deux rainures étroites 4, 5 crénelées, une surface d'échange thermique avec l'air environnant est créée, cette surface d'échange thermique correspondant à la surface de chacune des parois délimitant une rainure étroite. Chaque paroi de rainure étroite a une surface à neuf qui est égale approximativement à cinq fois la surface transversale équivalente vue en coupe de la bande de roulement, cette dernière surface transversale étant évaluée en multipliant la largeur W de la bande de roulement par l'épaisseur E de matière à user.

Dans la première partie de l'usage du pneu selon cette variante, la partie radialement la plus à l'extérieur de la bande de roulement se trouve être ventilée par la présence de ces deux rainures étroites zigzagantes 4, 5, lesquelles ont la faculté de se fermer lors du passage dans le contact pour maintenir un niveau de rigidité approprié à neuf. Après une usure partielle suffisante pour voir disparaitre les rainures étroites zigzagantes, les bonnes qualités intrinsèques à la rupture du matériau de la deuxième couche 222 assurent une bonne tenue du pneu.

La figure 2 montre une vue de la surface de roulement 10 d'une bande de roulement d'un pneu selon une deuxième variante de l'invention.

Selon cette deuxième variante, réalisée dans une dimension de pneu identique à celle de la première variante décrite ayant une bande de roulement de largeur W égale à 680 mm, il est formé par moulage trois rainures étroites et continues 4, 5, 6 faisant le tour complet du pneu et ayant chacune une forme sinusoïdale. Les rainures étroites de bord 4, 5 formées axialement le plus à l'extérieur de la bande de roulement ont chacune une même amplitude A1 et une longueur d'onde L1 et sont disposées de manière à être en opposition de phase l'une par rapport à l'autre.

Entre ces deux rainures étroites de bord 4, 5, il est formé une rainure étroite intermédiaire 6 ayant une amplitude A2 et une longueur d'onde L2. Cette amplitude A2 est, dans le cas présent, identique à l'amplitude A1 des rainures étroites des bords. Par contre, la longueur d'onde L2 de la rainure étroite intermédiaire 6 est moitié de la longueur d'onde L1 des rainures étroites des bords. Cette rainure étroite intermédiaire 6 s'étend transversalement de part et d'autre du plan médian équatorial XX' et est en phase avec l'une des deux rainures étroites formées sur les bords de la bande de roulement.

Entre chaque paire de rainures étroites 4 et 6 ou 6 et 5, il est ménagé un espace D vierge de toute découpure ; chacun de ces espaces D a une largeur égale à 40 mm.

La largeur entre chaque rainure étroite du bord et l'arête bord la plus proche est égale à 50 mm.

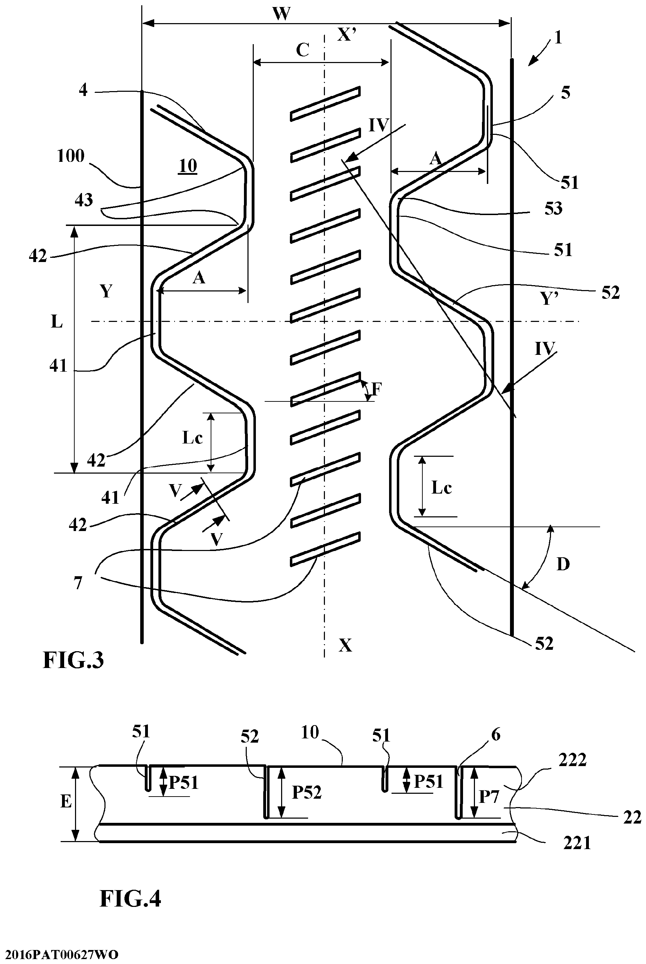

La figure 3 montre une vue surfacique d'une troisième variante selon l'invention d'un pneu d'une même dimension 29.5 R 29. Selon cette troisième variante, il est formé deux rainures étroites zigzagantes 4, 5, ces deux rainures étroites zigzagantes délimitant une région centrale C de largeur 210 mm. Dans cette variante, chaque rainure étroite a une forme zigzagante comprenant une succession de parties planes 41, 51 orientées circonférentiellement et de longueur Lc égale à 60 mm et de parties planes obliques 42, 52 inclinées d'un angle de 10° par rapport à la direction axiale du pneu. Chaque partie plane orientée circonférentiellement est reliée à des parties planes obliques par des parties courbes 43, 53 de rayon moyen égal à 25 mm.

Dans cette variante l'amplitude A est égale à 200 mm et la longueur d'onde égale à 500 mm.

En outre, il est formé sur le plan médian équatorial une pluralité de petites rainures étroites obliques 7 faisant un angle de 30° avec la direction axiale. Ces petites rainures étroites obliques 7 ont une profondeur égale à la profondeur des rainures étroites zigzagantes et elles occupent une largeur axiale égale à 20% de la largeur W de la bande de roulement soit 136 mm ; elles sont centrées sur le plan médian équatorial.

Dans une variante non représentée, ces petites rainures étroites obliques 7 peuvent être remplacées par au moins une rainure étroite unique, continue ou non, orientée circonférentiellement pour faire le tour complet du pneu.

La figure 4 montre une coupe transversale de la troisième variante de pneu montrée avec la figure 3 ; le plan de coupe est indiqué sur la figure 3 par sa trace IV-IV. La disposition dans l'épaisseur de la première couche 221 et de la deuxième couche 222 formant la bande de roulement 22 est identique à celle décrite précédemment pour la première variante de l'invention. Dans cette variante toutes les parties circonférentielles 41, 51 des rainures étroites zigzagantes 4, 5 sont pourvues d'un pontage reliant les parois en vis-à-vis de ladite rainure ; ce pontage occupe une hauteur égale à 30 mm mesurée à partir du fond des rainures étroites.

Dans le cas décrit avec les figures 3 et 4, la deuxième couche 222 constituant la bande de roulement 22 est choisie pour avoir une déformation moyenne à rupture égale à 775% et une énergie de rupture associée égale à 103 MJ à une température de 100°C.

Comme décrit plus haut, la largeur des rainures étroites est suffisamment faible pour permettre la mise en contact au moins partielle des parois en vis-à-vis délimitant ladite rainure étroite lors du passage dans le contact avec le sol. Pour ce faire, la largeur LR des rainures étroites est de préférence inférieure à 15% de la profondeur maximale des rainures. Sur l'exemple des figures, la profondeur maximale des rainures à neuf est de 70 mm et la largeur LR des rainures étroites et de 7mm, c'est à dire 10% de la profondeur maximale.

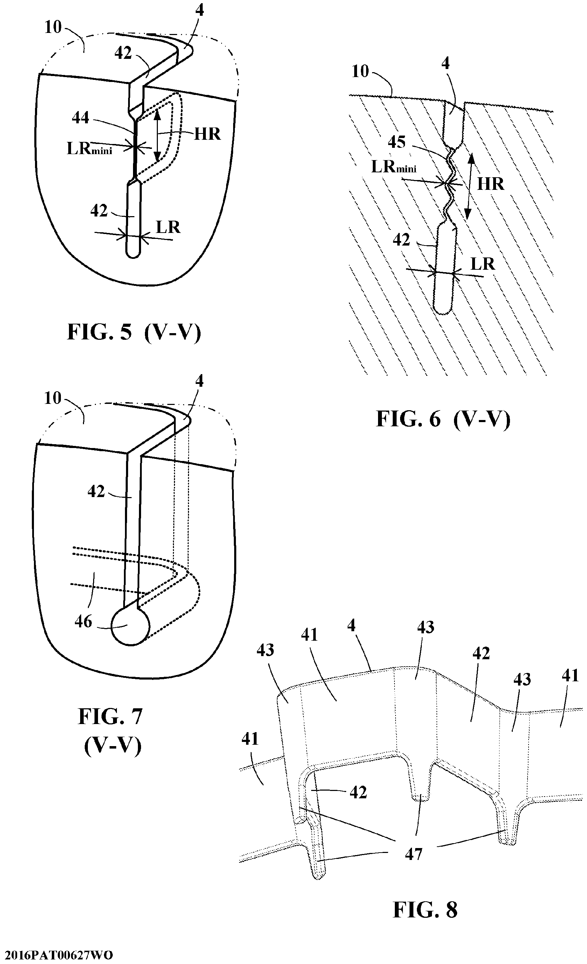

À la figure 5, on a représenté un détail d'un mode de réalisation préféré de l'invention. Le plan de coupe est indiqué sur la figure 3 par sa trace V-V. Dans ce mode de réalisation, les rainures étroites comprennent en outre des zones de largeur réduite 44 dans lesquelles la largeur LRₘᵢₙᵢ est comprise entre 5% et 75% et de préférence entre 5% et 20% de la largeur LR de ladite rainure étroite zigzagante. L'exemple représenté correspond à une largeur LR de 7 mm et une largeur LRₘᵢₙᵢ de 1mm.

Les zones de largeur réduite sont de préférence situées dans les parties orientées transversalement (42, 52) des rainures étroites (4, 5).

La figure 6 représente une mode de réalisation alternatif dans lequel les parois en vis-à-vis des zones de largeur réduite 45 sont ondulées de manière à favoriser encore la rigidité de la bande de roulement malgré la présence des découpures. L'amplitude et la période des ondulations sont de préférence respectivement comprises entre 10% et 300% et 25% et 300% de la largeur des rainures LR. Les ondulations représentées ici ont une amplitude de 3,4 mm et une période de 8.5mm.

Les zones de largeur réduite ont de préférence une hauteur radiale HR d'au moins 10% de la profondeur maximale de la rainure. Dans les exemples représentés, HR est de 25 mm.

Les zones de largeur réduite ont de préférence une longueur axiale Lga d'au moins 10% de l'amplitude A de la rainure. Dans les exemples représentés, la longueur Lga est de 70 mm.

De préférence les zones de largeur réduite sont plus proches de la surface de roulement à neuf que du fond des rainures. Dans l'exemple représenté, le centre des zones de largeur réduite se trouve à 27 mm de la surface de roulement 10.

La figure 7 illustre un mode de réalisation de l'invention dans lequel un canal 46 est formé dans le fond des rainures étroites, de préférence sur toute la longueur desdites rainures 4.

La figure 8 illustre un autre mode de réalisation de l'invention en montrant le seul volume des rainures étroites. Dans ce mode de réalisation, des puits radiaux 47 s'étendent du fond des rainures étroites vers l'intérieur du pneu. De préférence, lesdits puits sont positionnés dans les parties courbes 43 reliant les parties orientées circonférentiellement 41 et les parties obliques 42 des rainures étroites 4.

L'invention qui vient d'être décrite à l'aide de ces variantes n'est bien entendu pas limitée à ces seules variantes et diverses modifications peuvent y être apportées sans sortir du cadre défini par les revendications. Les combinaisons entre ces différentes variantes sont tout à fait possible en fonction du besoin et peuvent être aisément réalisées par la personne du métier.

## Revendications

1. Pneu (1) pour véhicule hors-la-route comprenant :
- une partie de sommet (2) prolongée de part et d'autre par des flancs (3), ces flancs se terminant par des bourrelets,
- une armature de carcasse s'étendant dans la partie de sommet (2), les flancs et les bourrelets, la partie de sommet (2) comprenant une armature de sommet (21) située radialement sur l'armature de carcasse, l'armature de sommet comprenant au moins une armature de travail (210) et une armature de protection (211), et radialement à l'extérieur une bande de roulement (22) ayant une largeur W et une épaisseur E de matière à user, cette épaisseur E de matière à user étant au moins égale à 50 mm, cette bande de roulement (22) étant pourvue d'au moins deux rainures étroites (4, 5) faisant le tour du pneu, les rainures étroites (4, 5) ayant une forme générale zigzagante de longueur d'onde L et d'amplitude A, la largeur (LR) de chaque rainure étroite zigzagante (4, 5) étant inférieure à 15% de la profondeur maximale desdites rainures étroites, et de préférence encore inférieure à 12%, ce pneu étant **caractérisé en ce que**
cette bande de roulement (22) comprend une superposition d'au moins deux couches de matériaux, une première couche (221) localisée radialement à l'intérieur et une deuxième couche (222) localisée radialement à l'extérieur de la première couche (221) pour venir en contact avec le sol quand le pneu est neuf, cette deuxième couche (222) ayant une épaisseur E2 comprise entre 20% et 90% de l'épaisseur E de matière à user,
**en ce que** le matériau de la première couche (221) de la bande de roulement (22) est choisi pour être faiblement hystérétique c'est-à-dire dont la valeur mesurée tan(δ) est au plus égale à 0.30, la valeur tan(δ) étant mesurée à la fréquence de 10Hz et à une température de 60°C selon la norme ASTM D 5992-96,
**en ce que** la longueur d'onde L des rainures étroites (4, 5) est comprise entre 10% et 120% de la largeur axiale W de la bande de roulement (22), et l'amplitude A est comprise entre 10% et 75% de cette même largeur axiale W,
et **en ce que** chaque rainure étroite zigzagante (4, 5) comprend en outre une pluralité de zones de largeur réduite (44, 45) dans lesquelles la largeur (LRₘᵢₙᵢ) est comprise entre 5% et 75% et de préférence entre 5% et 20% de la largeur (LR) de ladite rainure étroite zigzagante.

2. Pneu (1) pour véhicule hors-la-route selon la revendication 1 **caractérisé en ce que** le matériau de la première couche (221) de la bande de roulement (22) un matériau a une valeur de tan(δ) qui est au plus égale à 0.20.

3. Pneu (1) pour véhicule hors-la-route selon l'une des revendications 1 ou 2 **caractérisé en ce que** l'amplitude A des rainures étroites zigzagantes (4, 5) est comprise entre 10% et 40% de la largeur W de la bande de roulement (22).

4. Pneu (1) pour véhicule hors-la-route selon l'une des revendications 1 à 3 **caractérisé en ce que** chaque rainure étroite zigzagante (4, 5) a une profondeur maximale qui est au moins égale à 20% de l'épaisseur E de matière à user et au plus égale à 90% de la même épaisseur E et de préférence comprise entre 40% à 70% de l'épaisseur E.

5. Pneu (1) pour véhicule hors-la-route selon l'une des revendications 1 à 4 **caractérisé en ce que** la bande de roulement (22) comprend deux rainures étroites zigzagantes (4, 5), ces rainures étant situées de part et d'autre du plan médian équatorial, chaque rainure étroite zigzagante (4, 5) étant entièrement formée dans une moitié de largeur de la bande de roulement de façon à délimiter entre lesdites rainures étroites zigzagantes une partie centrale (C) de largeur comprise entre 0% et 70% de la largeur W de la bande de roulement et de préférence entre 40% à 70% de la largeur W de la bande de roulement.

6. Pneu (1) pour véhicule hors-la-route selon l'une des revendications 1 à 5 **caractérisé en ce que** chaque rainure étroite zigzagante (4, 5) comprend une pluralité de parties de rainure orientées principalement circonférentiellement, chacune de ces parties ayant une longueur Lc mesurée en projection sur la direction circonférentielle, chaque rainure étroite comprend en outre une pluralité de parties de rainure orientées transversalement ou obliquement selon un angle au plus égal à 45 degrés avec la direction axiale.

7. Pneu (1) pour véhicule hors-la-route selon la revendication 6 **caractérisé en ce qu'**une pluralité de pontages sont formés dans les rainures étroites zigzagantes (4, 5) au moins sur les parties de rainure orientées principalement circonférentiellement et situées axialement le plus à l'extérieur, chaque pontage étant formé à partir du fond des rainures étroites et réduit localement la profondeur de ces rainures étroites d'au moins 20% de la profondeur maximale de ces rainures étroites (4, 5).

8. Pneu (1) pour véhicule hors-la-route selon l'une des revendications 1 à 7
**caractérisé en ce que** les
zones de largeur réduite (44 ; 45) sont situées dans les parties des rainures étroites (42) qui sont orientées transversalement ou obliquement selon un angle au plus égal à 45 degrés avec la direction axiale.

9. Pneu (1) pour véhicule hors-la-route selon l'une des revendications 1 à 8
**caractérisé en ce que** les zones de largeur réduite (45) ont des parois ondulées en regard l'une de l'autre.

10. Pneu (1) pour véhicule hors-la-route selon l'une des revendications 1 à 9 **caractérisé en ce**
**que** chaque paroi de rainure étroite zigzagante (4, 5) a, à neuf, une surface qui est comprise entre trois et sept fois la surface transversale équivalente de la bande de roulement, cette dernière surface étant égale au produit de la largeur W de la bande de roulement par l'épaisseur de matière à user E.

11. Pneu (1) pour véhicule hors-la-route selon l'une des revendications 1 à 10 **caractérisé en ce**
**que** les rainures étroites zigzagantes (4, 5) déphasées l'une par rapport à l'autre dans la direction circonférentielle afin de réduire les vibrations induites par leur présence.

12. Pneu (1) pour véhicule hors-la-route selon l'une des revendications 1 à 11 **caractérisé en ce**
**qu'**il est formé une troisième rainure étroite (7) de forme générale zigzagante axialement entre les deux rainures étroites zigzagantes (4, 5) formées au voisinage des bords de la bande de roulement.

13. Pneu (1) pour véhicule hors-la-route selon l'une des revendications 1 à 12 **caractérisé en ce**
**que** la deuxième couche (222) constituant la bande de roulement (22) a un indice de déchirabilité, égal à la déformation moyenne à rupture, qui est au moins égal à 400% et une énergie à rupture au moins égale à 50 MJ, mesurées au moyen d'une éprouvette en forme de parallélépipède ayant pour dimensions 10 mm x 85 mm x 2.5 mm et entaillée en son milieu par trois entailles de profondeur 5 mm, à une température de 100°C.

## Patentansprüche

1. Reifen (1) für ein Geländefahrzeug, umfassend:
- einen Scheitelabschnitt (2), der auf beiden Seiten durch Flanken (3) verlängert ist, wobei diese Flanken durch Wülste enden,
- eine Karkassenbewehrung, die sich in dem Scheitelabschnitt (2), den Flanken und den Wülsten erstreckt, wobei der Scheitelabschnitt (2) eine Scheitelbewehrung (21) umfasst, die radial auf der Karkassenbewehrung angeordnet ist, wobei die Scheitelbewehrung mindestens eine Arbeitsbewehrung (210) und eine Schutzbewehrung (211) umfasst, und radial außen einen Laufstreifen (22) mit einer Breite W und einer Dicke E aus Verschleißmaterial aufweist, wobei die Dicke E aus Verschleißmaterial mindestens 50 mm beträgt, wobei der Laufstreifen (22) mit mindestens zwei schmalen Rillen (4, 5) versehen ist, die um den Reifen herum verlaufen, wobei die schmalen Rillen (4, 5) eine allgemeine Zickzackform mit einer Wellenlänge L und einer Amplitude A aufweisen,
wobei die Breite (LR) jeder schmalen Zickzackrille (4, 5) weniger als 15 % der maximalen Tiefe der schmalen Rillen und vorzugsweise noch weniger als 12 % beträgt,
wobei der Reifen **dadurch gekennzeichnet ist, dass** der Laufstreifen (22) eine Überlagerung von mindestens zwei Materialschichten umfasst, einer ersten Schicht (221), die sich radial innen befindet, und einer zweiten Schicht (222), die sich außerhalb der ersten Schicht (221) befindet, um mit dem Boden in Kontakt zu kommen, wenn der Reifen neu ist, wobei die Schicht (222) eine Dicke E2 zwischen 20 % und 90 % der Dicke E des Verschleißmaterials aufweist,
dass das Material der ersten Schicht (221) des Laufstreifens (22) so gewählt ist, dass es schwach hysteretisch ist, d. h. sein gemessener tan (δ)-Wert höchstens 0,30 beträgt, wobei der tan(δ)-Wert bei einer Frequenz von 10 Hz und einer Temperatur von 60°C nach der Norm ASTM D 5992-96 gemessen wird,
dass die Wellenlänge L der schmalen Rillen (4, 5) zwischen 10 % und 120 % der axialen Breite W des Laufstreifens (22) beträgt und die Amplitude A zwischen 10 % und 75 % dieser axialen Breite W beträgt und
dass jede schmale Zickzackrille (4, 5) ferner mehrere Bereiche mit reduzierter Breite (44, 45) umfasst, in denen die Breite (LRₘᵢₙᵢ) zwischen 5 % und 75 % und vorzugsweise zwischen 5 % und 20 % der Breite (LR) der schmalen Zickzackrille beträgt.

2. Reifen (1) für ein Geländefahrzeug nach Anspruch 1, **dadurch gekennzeichnet, dass** das Material der ersten Schicht (221) des Laufstreifens (22) ein Material mit einem tan(δ)-Wert von höchstens 0,20 ist.

3. Reifen (1) für ein Geländefahrzeug nach einem der Ansprüche 1 oder 2, **dadurch gekennzeichnet, dass** die Amplitude A der schmalen Zickzackrillen (4, 5) zwischen 10 % und 40 % der Breite W des Laufstreifens (22) beträgt.

4. Reifen (1) für ein Geländefahrzeug nach einem der Ansprüche 1 bis 3, **dadurch gekennzeichnet, dass** jede schmale Zickzackrille (4, 5) eine maximale Tiefe aufweist, die mindestens 20 % der Dicke E des Verschleißmaterials und höchstens 90 % dieser Dicke E beträgt und vorzugsweise zwischen 40 % bis 70 % der Dicke E liegt.

5. Reifen (1) für ein Geländefahrzeug nach einem der Ansprüche 1 bis 4, **dadurch gekennzeichnet, dass** der Laufstreifen (22) zwei schmale Zickzackrillen (4, 5) umfasst, wobei sich diese Rillen auf beiden Seiten der Äquatorialmittelebene befinden, wobei jede schmale Zickzackrille (4, 5) vollständig in einer halben Breite des Laufstreifens ausgebildet ist, so dass zwischen den schmalen Zickzackrillen ein mittlerer Bereich (C) mit einer Breite zwischen 0 % und 70 % der Breite W des Laufstreifens und vorzugsweise zwischen 40 % bis 70 % der Breite W des Laufstreifens begrenzt ist.

6. Reifen (1) für ein Geländefahrzeug nach einem der Ansprüche 1 bis 5, **dadurch gekennzeichnet, dass** jede schmale Zickzackrille (4, 5) mehrere Rillenabschnitte umfasst, die im Wesentlichen in Umfangsrichtung ausgerichtet sind, wobei jeder dieser Abschnitte eine Länge Le aufweist, die in Projektion auf die Umfangsrichtung gemessen wird, wobei jede schmale Rille ferner mehrere Rillenabschnitte umfasst, die quer oder schräg in einem Winkel von höchstens 45 Grad zur axialen Richtung ausgerichtet sind.

7. Reifen (1) für ein Geländefahrzeug nach Anspruch 6, **dadurch gekennzeichnet, dass** in den schmalen Zickzackrillen (4, 5) zumindest an den Rillenabschnitten, die im Wesentlichen in Umfangsrichtung ausgerichtet sind und sich axial am weitesten außen befinden, mehrere Brücken ausgebildet sind, wobei jede Brücke vom Boden der schmalen Rillen aus ausgebildet ist und die Tiefe dieser schmalen Rillen um mindestens 20 % der maximalen Tiefe dieser schmalen Rillen (4, 5) lokal reduziert.

8. Reifen (1) für ein Geländefahrzeug nach einem der Ansprüche 1 bis 7, **dadurch gekennzeichnet, dass** sich die Bereiche mit reduzierter Breite (44, 45) in den Abschnitten der schmalen Rillen (42) befinden, die quer oder schräg in einem Winkel von höchstens 45 Grad zur axialen Richtung ausgerichtet sind.

9. Reifen (1) für ein Geländefahrzeug nach einem der Ansprüche 1 bis 8, **dadurch gekennzeichnet, dass** die Bereiche mit reduzierter Breite (45) einander zugewandte wellenförmige Wände aufweisen.

10. Reifen (1) für ein Geländefahrzeug nach einem der Ansprüche 1 bis 9, **dadurch gekennzeichnet, dass** jede Wand einer schmalen Zickzackrille (4, 5) im Neuzustand eine Fläche aufweist, die zwischen dem Drei- und Siebenfachen der äquivalenten Querschnittsfläche des Laufstreifens beträgt, wobei diese Fläche gleich dem Produkt aus der Breite W des Laufstreifens und der Dicke des Verschleißmaterials E ist.

11. Reifen (1) für ein Geländefahrzeug nach einem der Ansprüche 1 bis 10, **dadurch gekennzeichnet, dass** die schmalen Zickzackrillen (4, 5) in der Umfangsrichtung gegeneinander phasenverschoben sind, um die durch ihr Vorhandensein hervorgerufenen Schwingungen zu reduzieren.

12. Reifen (1) für ein Geländefahrzeug nach einem der Ansprüche 1 bis 11, **dadurch gekennzeichnet, dass** axial zwischen den beiden schmalen Zickzackrillen (4, 5), die in der Nähe der Ränder des Laufstreifens ausgebildet sind, eine dritte schmale Rille (7) von allgemeiner Zickzackform ausgebildet ist.

13. Reifen (1) für ein Geländefahrzeug nach einem der Ansprüche 1 bis 12, **dadurch gekennzeichnet, dass** die zweite Schicht (222), die den Laufstreifen (22) bildet, einen der mittleren Reißverformung entsprechenden Reißindex von mindestens 400 % und eine Reißenergie von mindestens 50 MJ, gemessen mit Hilfe eines quaderförmigen Prüflings mit den Abmessungen 10 mm x 85 mm x 2,5 mm und mit mindestens drei 5 mm tiefen Einschnitten in seiner Mitte bei einer Temperatur von 100°C, aufweist.

## Claims

1. Tyre (1) for an off-road vehicle, comprising:
- a crown part (2) extended on each side by sidewalls (3), these sidewalls ending in beads,
- a carcass reinforcement extending in the crown part (2), the sidewalls and the beads,
the crown part (2) comprising a crown reinforcement (21) situated radially on the carcass reinforcement, the crown reinforcement comprising at least one working reinforcement (210) and one protective reinforcement (211) and radially on the outside of a tread (22) having a width W and a thickness E of wearable material, this thickness E of wearable material being at least equal to 50 mm,
this tread (22) being provided with at least two narrow grooves (4, 5) running all around the tyre, the narrow grooves (4, 5) have a zigzagging overall shape of wavelength L and amplitude A, the zigzagging narrow grooves (4, 5) width (LR) is less than 15% of the maximum depth of the said narrow grooves and more preferably still, less than 12%, this tyre being **characterized**:
**in that** this tread (22) comprises a superposition of at least two layers of materials, a first layer (221) located radially on the inside and a second layer (222) located radially on the outside of the first layer (221) to come into contact with the ground when the tyre is new, this second layer (222) having a thickness E2 comprised between 20% and 90% of the thickness E of wearable material,
**in that** the material of the first layer (221) of the tread (22) is chosen to have low hysteresis; what is meant by low-end hysteresis here is a material of which the measured tan(δ) value is at most equal to 0.30, the value of tan (δ) being measured at a frequency of 10 Hz and at a temperature of 60°C according to standard ASTM D 5992-96,
**in that** the wavelength L of the zigzagging narrow grooves (4, 5) being comprised between 10% and 120% of the axial width W of the tread (22), and the amplitude A being comprised between 10% and 75% of this same axial width W, and
**and in that** each zigzagging narrow groove (4, 5) further comprises a plurality of reduced-width zones (44; 45) in which the width (LRmini) is comprised between 5% and 75%, and preferably between 5% and 20% of the width (LR) of the said zigzagging narrow groove.

2. Tyre (1) for an off-road vehicle according to Claim 1, **characterized in that** the material adopted for the first layer (221) of the tread (22) is a material that has a tan(δ) value at most equal to 0.20.

3. Tyre (1) for an off-road vehicle according to one of Claims 1 and 2, **characterized in that** the amplitude A of the zigzagging narrow grooves (4, 5) is comprised between 10% and 40% of the width W of the tread (22).

4. Tyre (1) for an off-road vehicle according to one of Claims 1 to 3, **characterized in that** each zigzagging narrow groove (4, 5) has a maximum depth which is at least equal to 20% of the thickness E of wearable material and at most equal to 90% of the same thickness E, and preferably comprised between 40% and 70% of the thickness E.

5. Tyre (1) for an off-road vehicle according to one of Claims 1 to 4, **characterized in that** the tread (22) comprises two zigzagging narrow grooves (4, 5), these grooves being situated on each side of the equatorial mid-plane, each zigzagging narrow groove (4, 5) being formed entirely in one half of the width of the tread, so that there is delimited, between the said zigzagging narrow grooves, a central part (C) of a width comprised between 0% and 70% of the width W of the tread, and preferably comprised between 40% and 70% of the width W of the tread.

6. Tyre (1) for an off-road vehicle according to one of Claims 1 to 5, **characterized in that** each zigzagging narrow groove (4, 5) comprises a plurality of groove parts oriented chiefly circumferentially, each of these parts having a length Lc measured in projection onto the circumferential direction, each narrow groove further comprises a plurality of groove parts oriented transversely or obliquely at an angle at most equal to 45 degrees to the axial direction.

7. Tyre (1) for an off-road vehicle according to Claim 6, **characterized in that** a plurality of bridges are created in the zigzagging narrow grooves (4, 5), at least in the groove parts oriented chiefly circumferentially and situated axially furthest towards the outside, each bridge being formed from the bottom of the narrow grooves and locally reduces the depth of these narrow grooves by at least 20% of the maximum depth of these narrow grooves (4, 5).

8. Tyre (1) for an off-road vehicle according to Claims 1 to 7, **characterized in that** the reduced-width zones (44; 45) are situated in the narrow groove parts (42) which are oriented transversely or obliquely at an angle at most equal to 45 degrees to the axial direction.

9. Tyre (1) for an off-road vehicle according to one of Claims 1 to 8, **characterized in that** the reduced-width zones (4, 5) have undulating walls facing one another.

10. Tyre (1) for an off-road vehicle according to one of Claims 1 to 9, **characterized in that** each zigzagging narrow-groove wall (4, 5), when new, has a surface area which is comprised between three and seven times the equivalent transverse surface area of the tread, the latter surface area being the product of the width W of the tread times the thickness E of wearable material.

11. Tyre (1) for an off-road vehicle according to one of Claims 1 to 10, **characterized in that** the zigzagging narrow grooves (4, 5) are phase-shifted relative to one another in the circumferential direction so as to reduce the vibrations caused by their presence.

12. Tyre (1) for an off-road vehicle according to one of Claims 1 to 11, **characterized in that** a third narrow groove (7) of zigzagging overall shape is formed axially between the two zigzagging narrow grooves (4, 5) formed in the vicinity of the edges of the tread.

13. Tyre (1) for an off-road vehicle according to one of Claims 1 to 12, **characterized in that** the second layer (222) of which the tread (22) is made has a tear index, defined as being the mean deformation at break, which is at least equal to 400%, and an energy at break at least equal to 50 MJ, measured using a test piece in the shape of a parallelepiped having dimensions of 10 mm x 85 mm x 2.5 mm and notched in the middle by three notches 5 mm deep, at a temperature of 100°C.
